**Europäisches Patentamt**

**European Patent Office**

**Office européen des brevets**

(19)

(11) Veröffentlichungsnummer: **0 017 947 B1**

(12) **EUROPÄISCHE PATENTSCHRIFT**

(45) Veröffentlichungstag der Patentschrift:
**20.07.83**

(21) Anmeldenummer: **80101988.6**

(22) Anmeldetag: **14.04.80**

(51) Int. Cl.³: **C 08 G 18/32**, C 08 G 18/14

(54) Verfahren zur Herstellung urethangruppenhaltiger Polyisocyanuratschaumstoffe.

(30) Priorität: **17.04.79 DE 2915468**

(43) Veröffentlichungstag der Anmeldung:
**29.10.80 Patentblatt 80/22**

(45) Bekanntmachung des Hinweises auf die Patenterteilung:
**20.07.83 Patentblatt 83/29**

(84) Benannte Vertragsstaaten:
**AT BE CH DE FR GB IT LI NL SE**

(56) Entgegenhaltungen:
**DE-A-1 802 500**
**DE-A-1 953 637**
**DE-A-2 614 203**

(73) Patentinhaber: **BASF Aktiengesellschaft,
Carl-Bosch-Strasse 38, D-6700 Ludwigshafen (DE)**

(72) Erfinder: **Falkenstein, Georg, Dr., Im Kaestenbusch 22,
D-6730 Neustadt 19 (DE)**
Erfinder: **Kessler, Hansjuergen, Dr.,
Schwanenstrasse 1 A, D-6800 Mannheim 51 (DE)**

## Verfahren zur Herstellung urethangruppenhaltiger Polyisocyanuratschaumstoffe

Die Erfindung betrifft ein Verfahren zur Herstellung von urethangruppenhaltigen Polyisocyanuratschaumstoffen aus Polyisocyanaten und Polyhydroxyverbindungen, wobei als Polyhydroxyverbindungen saure, neutrale und/oder basische Salze aus hydroxylgruppenhaltigen sekundären und/oder tertiären Aminen und Naphthensäuren oder Mischungen aus den genannten Salzen und üblichen Polyolen verwendet werden.

Die Herstellung von halbharten und harten Polyurethan-Schaumstoffen aus Polyolen, insbesonders polyfunktionellen Polyätherolen, organischen Polyisocyanaten, Katalysatoren, Treibmitteln sowie Hilfs- und Zusatzstoffen wird in der einschlägigen Fachliteratur eingehend beschrieben. Verweisen möchten wir beispielsweise auf das Kunststoff-Handbuch, Band VII, «Polyurethane» von R. Vieweg und A. Höchtlen, Carl Hanser Verlag, München, 1966.

Nach Angaben der CH-PS 343 635 werden zur Herstellung von Polyurethanschaumstoffen Salze von sekundären oder tertiären Aminen, die gegebenenfalls Hydroxylgruppen gebunden enthalten können, und Monocarbonsäuren, Polycarbonsäuren, Sulfonsäuren oder sauren Schwefelsäureestern in Mengen von 1 bis 10 Gewichtsprozent, bezogen auf die Polyhydroxyverbindung, als Aktivatoren verwendet. Bei Verwendung von hydroxylgruppenhaltigen Salzen wird entsprechend den Beispielen die OH-Gruppe vor der Urethanreaktion durch Additions- oder Kondensationsreaktionen maskiert.

Zur Herstellung von Polyurethan-Schaumstoffen können ferner Fettsäuren, Fettsäureester, Fettsäureamide oder Salze von Fettsäuren verwendet werden. So beschreibt die DE-AS-1 173 643 die Herstellung von Weichschaumstoffen mit der für eine textile Verarbeitung erwünschten Griffigkeit und samtartigen Oberflächenstruktur aus Toluylen-diisocyanat, einem speziellen Polyesterol und einer besonderen Treibmittelmischung in Gegenwart von 1 bis 10 Gewichtsprozent, bezogen auf das Polyesterol, Tallöl. Nach Angaben der britischen Patentschrift 882 949 werden vorzugsweise neutrale, Wasser enthaltende Salze von Hydroxyfettsäuren, wie Hydroxystearinsäure, Ricinolsäure und Ricinusöl, und sekundäre und tertiäre Amine zur Herstellung von Schaumstoffen verwendet. Gemäss britischer Patentschrift 1 248 919 kann man dafür auch Amide von Fettsäuren mit 8 bis 24 Kohlenstoffatomen und Dialkanolaminen, die auch noch Salze aus Dialkanolamin und Fettsäure sowie Fettsäureester enthalten können, einsetzen. Die Salze selbst bilden äusserst spröde Schaumstoffe, die vielfach kollabieren. Polyurethanschaumstoffe mit Skelettstruktur, die anstelle von Zellwänden lediglich Zellstege besitzen, werden gemäss US-PS 3 178 300 ferner aus Polyisocyanaten und Ricinusöl in Gegenwart von Monoalkoholen mit 1 bis 18 Kohlenstoffatomen oder von Monocarbonsäuren mit 2 bis 18 Kohlenstoffatomen hergestellt.

Nachteilig an den beschriebenen Schaumstoffen, insbesonders solchen auf der Grundlage von Tallöl, ist, dass sie gewöhnlich sehr unangenehm riechen. Dem Fachmann ist ausserdem bekannt, dass Polyurethanschaumstoffe mit hohen Anteilen an Naturstoffen etwas ungünstigere mechanische Eigenschaften besitzen als Produkte, die nur synthetische Polyole enthalten.

Der Anwendungsbereich derartiger Schaumstoffe wird ferner durch ihre Brennbarkeit begrenzt. Es wurde deshalb versucht, diesen Mangel durch Zusatz von Brandschutzmittel in grossen Mengen, wie Antimonoxid, chlorierten Verbindungen, wie dem Diels-Alder-Addukt aus Hexahalogencyclopentadien und Maleinsäureanhydrid, oder von Phosphorhalogenverbindungen, wie Tris-2-chloräthyl-phosphat, Tris-(dichlorpropyl)-phosphat oder Tris-(2,3-dibrompropyl)-phosphat zu beheben.

Das Problem wird durch diese Massnahmen jedoch nur teilweise gelöst, denn die erzielte Flammwidrigkeit wird durch einen erheblichen Rückgang der mechanischen und thermischen Eigenschaftswerte erkauft. Ausserdem ist die Massnahme teuer.

Die Herstellung von urethangruppenhaltigen Polyisocyanuratschaumstoffen ist ebenfalls nicht neu.

Derartige Polymerschaumstoffe besitzen eine vergleichsweise hohe Temperaturbeständigkeit und eine verbesserte Flammbeständigkeit. Polyisocyanuratschaumstoffe sind jedoch sehr spröde. Die Sprödigkeit kann zwar durch eine Erhöhung des Polyolgehaltes vermindert werden, nachteilig ist jedoch, dass dadurch gleichzeitig die flammhemmenden Eigenschaften verringert werden.

Aufgabe der vorliegenden Erfindung war es, die aus Erdöl isolierten Naphthensäuren, die zum grössten Teil verbrannt werden, einer kommerziellen Nutzung zuzuführen. Ferner sollte versucht werden, die ausserordentlich preisgünstige Naphthensäure als Polyolkomponente zur Herstellung von urethangruppenhaltigen Polyisocyanuratschaumstoffen einzusetzen, wobei die üblichen Polyole ganz oder teilweise durch Naphthensäure, deren Derivate oder Salze ersetzt werden sollten.

Diese Aufgabe wird gelöst durch ein Verfahren zur Herstellung von urethangruppenhaltigen Polyisocyanuratschaumstoffen aus organischen Polyisocyanaten, Polyhydroxyverbindungen, Treibmitteln, Katalysatoren, gegebenenfalls Hilfs- und Zusatzstoffen, das dadurch gekennzeichnet ist, dass man als Polyhydroxyverbindungen saure, neutrale und/oder basische Salze aus hydroxylgruppenhaltigen sekundären und/oder tertiären Aminen und Naphthensäuren verwendet.

Obwohl Naphthensäuren einen charakteristischen Geruch besitzen, sind die erfindungsgemäss hergestellten urethangruppenhaltigen Polyisocyanuratschaumstoffe überraschenderweise nahezu geruchlos. Aufgrund der Zusammensetzung der Naphthensäuren aus aliphatischen mono- und bicyclischen gesättigten monofunktionellen Carbonsäuren, die ausserdem je nach Herkunftsland in gewissen Bereichen schwankt, war erstaunlich, dass die Umsetzung der oben beschriebenen Salze mit organischen Polyisocyanaten zu Polyisocyanuratschaumstoffen mit guten mechanischen Eigenschaften führt. Überraschend war insbesonders, dass die erfindungsgemäss hergestellten Schaumstoffe gute mechanische und thermische Eigenschaftswerte bei gutem Brandverhalten besitzen.

Wie bereits dargelegt wurde, werden zur Herstellung der Polyisocyanuratschaumstoffe nach dem erfindungsgemässen Verfahren als Polyhydroxyverbindungen saure, neutrale und/oder vorzugsweise basische Salze aus hydroxylgruppenhaltigen sekundären und/oder tertiären Aminen und Naphthensäuren verwendet. Die Definition «saure, neutrale oder basische Salze» soll hierbei in dem Sinne verstanden werden, dass bei einem sauren Salz die Säure, bei einem basischen Salz die Base im Überschuss vorhanden ist und bei einem neutralen Salz die Komponenten im äquivalenten Mengenverhältnis vorliegen. Hinweise auf die Acidität der Salze sollen durch die Definition nicht gegeben werden.

Erfindungsgemäss werden basische Salze bevorzugt verwendet.

Die erfindungsgemäss zur Bildung von Naphthensäure-Salzen verwendbaren hydroxylgruppenhaltigen sekundären und tertiären Amine müssen mindestens difunktionell sein. In Betracht kommen beispielsweise Amine, die mindestens eine sekundäre Aminogruppe und mindestens eine Hydroxylgruppe gebunden enthalten oder Amine, die mindestens eine tertiäre Aminogruppe, mindestens eine Hydroxylgruppe und, falls nur eine Hydroxylgruppe vorhanden ist, zusätzlich mindestens einen weiteren Rest mit einem gegenüber Isocyanaten reaktiven Wasserstoffatom, beispielsweise eine SH-, NH- und/oder NH$_2$-Gruppe, besitzen. Geeignet sind ferner Amine, die neben mindestens einer Hydroxylgruppe eine sekundäre und tertiäre Aminogruppe gebunden haben oder Mischungen aus hydroxylgruppenhaltigen sekundären und tertiären Aminen. Genannt seien beispielsweise sekundäre Amine, z.B. N-Alkyl-alkanolamine mit 1 bis 4 Kohlenstoffatomen im Alkylrest und 2 bis 5 Kohlenstoffatomen im Alkanolaminrest, wie N-Methyl-äthanolamin, N-Butyläthanolamin, N-Methyl-propanolamin und N-Äthyl-propanolamin, Dialkanolamine, wie Diäthanolamin, Diisopropanolamin und N-Äthanol-N-isopropanolamin, tertiäre Amine, z.B. N-Alkyl-dialkanolamine mit 1 bis 4 Kohlenstoffatomen im Alkylrest, wie
N-Methyl-diäthanolamin,
N-Methyl-diisopropanolamin,
N-Äthyl-diäthanolamin,
N-Äthyl-diisopropanolamin
und N-Butyl-diäthanolamin; Trialkanolamine, wie Triäthanolamin, Triisopropanolamin;

N,N,N′,N′-tetrakis-(β-hydroxyäthyl)-äthylendiamin,
N,N,N′,N′-tetrakis-(β-hydroxypropyl)-äthylendiamin,
N,N,N′,N″,N″-pentakis-(β-hydroxyäthyl)-diäthylentriamin
sowie sekundäre und/oder tertiäre Aminogruppen enthaltende Kondensationsprodukte aus aliphatischen Diaminen mit 2 bis 12, vorzugsweise 2 bis 6 Kohlenstoffatomen im Alkylenrest, wie Äthylendiamin, 1,4-Butylen-diamin und 1,6-Hexamethylendiamin, und Alkylenoxiden, beispielsweise Äthylenoxid und Propylenoxid und deren Gemische, mit Molekulargewichten von 75 bis 800, vorzugsweise von 80 bis 600 und sekundäre und/oder tertiäre Aminogruppen enthaltende Polyesterole, wie sie im weiteren Verlauf beschrieben werden. Die hydroxylgruppenhaltigen sekundären und/oder tertiären Amine können als solche oder in Form von Mischungen zur Anwendung gelangen. Vorzugsweise verwendet werden Dialkanolamine, insbesondere Diäthanolamin, Trialkanolamine, insbesondere Triäthanolamin,

N,N,N′,N′-tetrakis-(β-hydroxypropyl)-äthylendiamin,
N,N,N′,N′,N″-pentakis-(β-hydroxyäthyl)-diäthylentriamin,
sekundäre und/oder tertiäre Aminogruppen enthaltende Kondensationsprodukte aus aliphatischen Diaminen und Äthylenoxid und/oder Propylenoxid und sekundäre und/oder tertiäre Aminogruppen enthaltende Polyesterole, insbesondere aus aliphatischen Dicarbonsäuren und Isopropanolamingemischen.

Naphthensäuren im Sinne der Erfindung sind Säuren und Säuregemische mit den allgemeinen Formeln C$_n$H$_{2n-1}$COOH und C$_n$H$_{2n-3}$COOH, die im Erdöl vorkommen. Sie werden üblicherweise durch Extraktion mit Alkali und Ansäuern der alkalischen Lösung in Form eines braunen bis schwarzen, viskosen Produkts gewonnen und enthalten gewöhnlich noch gewisse Anteile an Neutralölen. Naphthensäuren sind gesättigte cyclische Carbonsäuren, die je nach Herkunft des Erdöls mehr oder weniger grosse Anteile an linearen aliphatischen Carbonsäuren der Formel C$_n$H$_{2n+1}$COOH enthalten. Man unterscheidet bei Naphthensäuren moncyclische Carbonsäuren der Formel C$_n$H$_{2n-1}$COOH von bicyclischen Carbonsäuren der Formel C$_n$H$_{2n-3}$COOH. Die monocyclischen Carbonsäuren beginnen mit der einfachsten Naphthensäure, der Cyclopentancarbonsäure, und steigen an bis zu Verbindungen mit 20 Kohlenstoffatomen. Sie sind fast immer vermischt mit Carbonsäuren der bicyclischen Reihe C$_n$H$_{2n-3}$COOH (n $\geqslant$ 12). Die Naphthensäuren können mit Hilfe bekannter Verfahren gereinigt werden. Entsprechende Verfahren werden beispielsweise beschrieben in der Monographie «Naphthensäuren und Naphthenate» von W.F. Maass, E. Buchspiess-Paulentz und F. Stinsky, Verlag für chemische Industrie H. Ziolkowsky KG, Augsburg, 1961. Geeignet sind sowohl destillierte Naphthensäuren als auch die preiswerten technischen Qualitäten.

Vorzugsweise verarbeitet werden handelsübliche technische Naphthensäuren.

Die erfindungsgemäss verwendbaren Naphthensäuren besitzen Säurezahlen von 60 bis 350, vorzugsweise von 90 bis 280, und Dichten bei 15 °C von 0,92 bis 1,00, vorzugsweise von 0,96 bis 0,995 g/cm³.

Zur Herstellung der sauren, neutralen und/oder basischen Salze werden die hydroxylgruppenhaltigen sekundären und tertiären Amine und Naphthensäuren bei Temperaturen von 0 bis 150 °C, vorzugsweise von 10 bis 100 °C in solchen Mengen zur Reaktion gebracht, dass pro Carboxyläquivalent der Naphthensäure 0,3 bis 50, vorzugsweise 0,5 bis 30, insbesondere 0,8 bis 10 äquivalente sekundäre und/oder tertiäre Aminogruppen vorliegen. Unter den genannten Reaktionsbedingungen entstehen vorzugsweise die Salze der genannten Ausgangskomponenten. Es hat sich jedoch gezeigt, dass auch durch die Bildung von Naphthensäureamiden bzw. -estern in untergeordneten Mengen das erfindungsgemässe Verfahren nicht negativ beeinflusst wird.

Zur Herstellung der urethangruppenhaltigen Polyisocyanuratschaumstoffe können als Polyhydroxyverbindungen ausschliesslich die beschriebenen sauren, neutralen und vorzugsweise basischen Naphthensäuresalze verwendet werden. Zur Herstellung von Schaumstoffen mit je nach Anwendungsgebieten speziellen mechanischen Eigenschaften ist es jedoch vielfach zweckmässig, die Naphthensäuresalze mit üblichen Polyolen zu mischen. Besonders bewährt und daher vorzugsweise verwendet werden Mischungen aus

a) 1 bis 90 Gewichtsprozent, vorzugsweise 5 bis 70 Gewichtsprozent eines sauren, neutralen und/oder basischen Salzes aus hydroxylgruppenhaltigen sekundären und/oder tertiären Aminen und Naphthensäuren und

b) 99 bis 10 Gewichtsprozent, vorzugsweise 95 bis 30 Gewichtsprozent, eines üblichen Polyäther- oder Polyesterpolyols oder eines Polyolgemisches aus Polyätherolen und/oder Polyesterolen, wobei die Gewichtsprozente bezogen sind auf das Gesamtgewicht der Mischungen.

Als übliche Polyole im Sinne der Erfindung kommen beispielsweise Polyesterole und insbesondere Polyätherole in Betracht. Verwendet werden können jedoch auch andere hydroxylgruppenhaltige Polymere mit Molekulargewichten von 200 bis 6000, beispielsweise Polyacetale, wie Polyoxymethylene, Polyesteramide und Polycarbonate, insbesondere solche hergestellt durch Umesterung von Diphenylcarbonat mit Hexandiol-1,6.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen und mehrwertigen Alkoholen, hergestellt werden. Genannt seien beispielhaft aliphatische Dicarbonsäuren, wie Glutarsäure, Pimelinsäure, Korksäure, Acelainsäure, Sebacinsäure, Undecandisäure und vorzugsweise Bernstein- und Adipinsäure, und aromatische Dicarbonsäuren, wie Phthalsäure, Terephthalsäure sowie Tetrahydrophthalsäure. Beispiele für zwei- und mehrwertige Alkohole sind: Äthylenglykol, Diäthylenglykol, 1,2- bzw. 1,3-Propylenglykol, Dipropylenglykol, Butandiol-1,4, Hexandiol-1,6, Decandiol-1,10, Trimethylolpropan, Glycerin, Pentaerythrit und Saccharose. Vorzugsweise verwendet werden Äthylenglykol, Propylenglykol und Glycerin.

Bewährt haben sich besonders Polyesterole, die durch Polykondensation eines Dicarbonsäuregemisches, das, bezogen auf das Gesamtgewicht der genannten Dicarbonsäuren, enthält: 20 bis 35 Gewichtsprozent, vorzugsweise 28 bis 33 Gewichtsprozent Bernsteinsäure, 35 bis 50 Gewichtsprozent, vorzugsweise 40 bis 45 Gewichtsprozent Glutarsäure und 20 bis 32 Gewichtsprozent, vorzugsweise 24 bis 28 Gewichtsprozent Adipinsäure mit mehrwertigen Alkoholen, wie Äthylenglykol, Diäthylenglykol, Propylenglykol, Glycerin und Trimethylolpropan, oder vorzugsweise mit einem Isopropanolamingemisch erhalten werden.

Das Dicarbonsäuregemisch kann neben den genannten Dicarbonsäuren noch bis zu 5 Gewichtsprozent, vorzugsweise 2 bis 3 Gewichtsprozent, bezogen auf das Gesamtgewicht, Verunreinigungen enthalten, welche im wesentlichen aus Imiden der Bernstein- und Glutarsäure bestehen. Dicarbonsäuregemische der genannten Art können beispielsweise als Nebenprodukte bei der Herstellung von Adipinsäure durch Oxidation von Cyclohexanol oder Cyclohexanon mit Salpetersäure gewonnen werden.

Als Isopropanolamingemische kommen beispielsweise solche in Betracht, die 5 bis 40 Gewichtsprozent, vorzugsweise 15 bis 25 Gewichtsprozent Diisopropanolamin und 95 bis 60 Gewichtsprozent, vorzugsweise 85 bis 75 Gewichtsprozent Triisopropanolamin, bezogen auf das Gesamtgewicht von Di- und Triisopropanolamin enthalten, wobei das Isopropanolamingemisch noch bis maximal 8 Gewichtsprozent, vorzugsweise bis zu 3 Gewichtsprozent, bezogen auf das Gesamtgewicht, Nebenprodukte enthalten kann. Die Isopropanolamingemische besitzen mit Phthalsäureanhydrid reagierende Wasserstoffatome entsprechend einer OH-Zahl von 830 bis 950, vorzugsweise von 860 bis 920 (mg KOH/g).

Entsprechende Isopropanolamingemische können beispielsweise bei der Herstellung von Diisopropanolamin aus Ammoniak bzw. Isopropanolamin und Propylenoxid als Nebenprodukte gewonnen werden.

Die Polyesterole, die Molekulargewichte von 200 bis 4000, vorzugsweise von 300 bis 1500 und eine OH-Zahl von 40 bis 880, vorzugsweise von 150 bis 600 besitzen, können einzeln oder als Gemische mit den sauren, neutralen und/oder basischen Naphthensäuresalze zur Anwendung kommen.

Die Polyätherole werden nach bekannten Verfahren aus einem oder mehreren Alkylenoxiden mit 2 bis 4 Kohlenstoffatomen im Alkylenrest und einem Startermolekül, das 2 bis 8 aktive Wasserstoffatome gebunden enthält, hergestellt. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, Dicarbonsäuren, wie Bernstein-, Adipin-, Phthal- und Terephthalsäure, gegebenenfalls mono- und dialkylsubstituierte Diamine mit 1 bis 4 Kohlenstoffatomen im Alkylrest, wie Äthylendiamin, 1,2- bzw. 1,3-Propylendiamin, 1,4-Butylendiamin, 1,6-Hexamethylendiamin, 4,4'-, 2,4'- und 2,2'-Diaminodiphenylmethan, Triamine, wie Diäthylentriamin, gegebenenfalls alkylsubstituierte Dialkanolamine mit 1 bis 4 Kohlenstoffatomen im Alkylrest, wie Diäthanolamin, Diisopropanolamin, N-Methyl- und N-Äthyl-diäthanolamin; Trialkanolamine, wie Triäthanolamin und Triisopropanolamin und vorzugsweise mehrwertige, Alkohole, wie Äthylenglykol, 1,2- bzw. 1,3-Propylenglykol, Diäthylenglykol, Dipropylenglykol, Butylenglykol-1,4, Hexamethylenglykol-1,6, Glycerin, Trimethylolpropan, Trimethyloläthan, Pentaerythrit, Sorbit und Saccharose. Vorzugsweise verwendet werden Äthylenglykol, Propylenglykole, Glycerin, Sorbit und Saccharose. Die Polyätherole können einzeln oder als Mischungen untereinander und mit den oben beschrieben Polyesterolen gemeinsam mit den Naphthensäuresalzen eingesetzt werden.

Gegebenenfalls kann es zweckmässig sein, neben den sauren, neutralen und/oder basischen Salzen der Naphthensäuren oder Mischungen der naphthensauren Salze mit üblichen Polyolen zusätzlich Vernetzungsmittel zur Herstellung der Polyisocyanurat-Schaumstoffe mitzuverwenden. Als Vernetzungsmittel kommen polyfunktionelle, insbesondere di- bis tetrafunktionelle Verbindungen mit Molekulargewichten von 18 bis kleiner 600, vorzugsweise von 60 bis 400 in Betracht. Geeignet sind beispielsweise zwei- und/oder dreiwertige Alkohole, wie Äthylenglykol, Propylenglykol, Butylenglykol-1,4, Hexamethylenglykol-1,6, Glycerin, Di-(β-hydroxyäthyl)-hydrochinon, Diamine, wie Äthylendiamin, 3,3'-Di- bzw.

3,3',5,5'-tetraalkylsubstituierte-4,4'-diamino-diphenylmethane

mit 1 bis 4 Kohlenstoffatomen im Alkylrest, 3,3'-Dichlor-4,4'-diamino-diphenylmethan und Alkanolamine, wie Diäthanolamin und Triäthanolamin.

Zur Herstellung der urethangruppenhaltigen Polyisocyanurat-Schaumstoffe sind organische Polyisocyanate der Formel $R(NCO)_n$ geeignet, worin R einen mehrwertigen aliphatischen, alkylaromatischen oder aromatischen organischen Rest oder gemischte Reste dieser Art und n eine ganze Zahl bedeuten, deren Wert der Valenzzahl von R entspricht und wenigstens zwei beträgt. Zu typischen organischen Polyisocyanaten für die erfindungsgemässen Zwecke gehören beispielsweise aromatische Polyisocyanate, wie 2,4- und 2,6-Toluylendiisocyanate, 2,2'-, 2,4'-, 4,4'-Diphenylmethan-diisocyanate, Triphenylmethan-triisocyanate, Biphenyl-diisocyanate, m- oder p-Phenylen-diisocyanat und 1,5-Naphthylen-diisocyanat und aliphatische Polyisocyanate, wie Isophorondiisocyanat und Hexamethylendiisocyanat. Vorzugsweise verwendet man die rohen und reinen Toluylendiisocyanate und Mischungen aus 2,2'-, 2,4'- und 4,4'-Diphenylmethan-diisocyanat und Polyphenyl-polymethylen-polyisocyanaten (roh-MDI). Die Polyisocyanate können einzeln oder als Gemische zur Anwendung kommen.

Zur Herstellung der urethangruppenhaltigen Polyisocyanuratschaumstoffe werden die Polyisocyanate und erfindungsgemäss verwendbaren Naphthensäuresalze oder Mischungen aus Naphthensäuresalzen und gegebenenfalls üblichen Polyolen und/oder Vernetzungsmitteln in solchen Mengenverhältnissen zur Reaktion gebracht, dass pro Hydroxylgruppe oder Summe aus Hydroxylgruppe und anderen Zerewitinoff-aktiven Wasserstoffatomen 1,1 bis 10, vorzugsweise 1,7 bis 6 NCO-Gruppen in der Reaktionsmischung vorliegen.

Zu Treibmitteln, welche beim erfindungsgemässen Verfahren verwendet werden können, gehört Wasser, das mit Isocyanatgruppen unter Bildung von Kohlendioxid reagiert. Die Wassermengen, die zweckmässigerweise verwendet werden können, betragen 0,2 bis 4 Gewichtsprozent, vorzugsweise 1 bis 3 Gewichtsprozent, bezogen auf das Gewicht der Polyhydroxyverbindungen.

Andere verwendbare Treibmittel, die vorzugsweise verwendet werden, sind niedrigsiedende Flüssigkeiten, die unter dem Einfluss der exothermen Polymerisations- bzw. Polyadditionsreaktion verdampfen.

Geeignet sind Flüssigkeiten, welche gegenüber dem organischen Polyisocyanat inert sind und Siedepunkte von nicht über 100 °C bei Atmosphärendruck, vorzugsweise zwischen −40 und +50 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

Die zweckmässigste Menge an niedrigsiedender Flüssigkeit zur Herstellung von Schaumstoffen hängt von der Schaumdichte, die man erreichen will, sowie gegebenenfalls von der Mitverwendung von Wasser ab. Im allgemeinen liefern Mengen von 5 bis 40 Gewichtsprozent, bezogen auf 100 Gewichtsteile Polyhydroxyverbindung, zufriedenstellende Ergebnisse.

Die erfindungsgemäss verwendbaren sauren, neutralen und/oder basischen Naphthensäuresalze können eine schaumstabilisierende und eine das Schaumbild und die Porenstruktur beeinflussende Wirkung besitzen, so dass bei der Herstellung der Polyisocyanurat-Schaumstoffe gegebenenfalls ganz oder teilweise auf derartige Hilfs- und Zusatzstoffe verzichtet werden kann. Gewöhnlich werden aber bei der erfindungsgemässen Reaktion oberflächenaktive Substanzen mitverwendet. Auch andere Hilfs- und Zusatzstoffe können Anwendung finden. Genannt seien beispielsweise Katalysatoren, Weichmacher, Flammschutzmittel, Hydrolysenschuztmittel, fungistatisch und bakteriostatisch wirkende Substanzen, Farbstoffe, Pigmente und Füllstoffe.

Katalysatoren für die Cyclisierung und Polymerisation von Isocyanaten sind bekannt. Als Beispiel seien genannt: starke Basen, wie quarternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise Natriummethylat und Kaliumisopropylat; Trialkylphosphine, beispielsweise Triäthylphosphin; Alkylaminoalkylphenole, beispielsweise 2,4,6-Tris-(dimethylaminomethyl)-phenol; 3- und/oder 4-substituierte Pyridine, beispielsweise 3- oder 4-Methylpyridin; metallorganische Salze, beispielsweise Tetrakis-(hydroxyäthyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumformiat, Kaliumoctoat, Kalium-2-äthyl-hexoat, Kalium-benzoat, Natriumpikrat und Phthalimid-kalium. Vorzugsweise verwendet werden die stark basischen

N,N′,N″-Tris-(dialkylaminoalkyl)-s-hexahydrotriazine,

beispielsweise das

N,N′,N″-Tris-(dimethylaminopropyl)-s-hexahydrotriazin,

Kaliumoctoat, Kaliumformiat, Natrium- und Kaliumhydroxid einzeln oder als Mischungen.

In vielen Fällen ist es vorteilhaft, neben den genannten Cyclisierungs- und Polymerisationskatalysatoren zusätzlich Verbindungen zu verwenden, die die Polyurethanbildung aus Polyolen und Polyisocyanaten katalysieren. Geeignet sind übliche Katalysatoren, beispielsweise tertiäre Amine, wie Dimethylbenzylamin, Dicyclohexylmethylamin, Dimethylcyclohexylamin, N-Methyl- bzw. N-Äthylmorpholin, Dimethylpiperazin, Pyridin, 1-Aza-bicyclo-(3,3,0)-octan, Dimethylaminoäthanol, 1,2-Dimethylimidazol und Triäthylendiamin, und Metallsalze, wie Eisen-II-chlorid, Zinkchlorid und vorzugsweise Zinn-II-salze und Dibutylzinndilaurat. Zur Erzielung von verschäumungstechnisch günstigen Reaktionszeiten wird in Abhängigkeit von der Aktivität des gewählten Katalysators bzw. des Katalysatorgemischs die einzusetzende Menge empirisch ermittelt. Im allgemeinen hat es sich als zweckmässig erwiesen, 0,5 bis 10 Gewichtsteile eines Cyclisierungs- bzw. Polymerisationskatalysators bzw. -gemisches und gegebenenfalls 0,3 bis 5 Gewichtsteile, vorzugsweise 0,8 bis 3 Gewichtsteile eines Polyurethankatalysators für jeweils 100 Gewichtsteile Polyhydroxyverbindung zu verwenden.

Zusätzlich verwendet werden können beispielsweise auch oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannte seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizonolsäureester und Türkischrotöl, die in Mengen von 0,2 bis 6 Gewichtsteilen pro 100 Gewichtsteile Polyhydroxyverbindung angewandt werden.

Es kann auch vorteilhaft sein, einen Weichmacher in das Reaktionsgemisch einzubeziehen, so dass die Neigung zur Sprödigkeit in den Produkten verringert wird. Es können übliche Weichmachungsmittel verwendet werden, doch ist es besonders zweckmässig, solche Mittel zu verwenden, die Phosphor und/oder Halogenatome enthalten und dadurch die Flammfestigkeit der Polyisocyanuratschaumstoffe zusätzlich vergrössern. Zu solchen Mitteln gehören Trikresylphosphat, Tris-2-chloräthylphosphat, Tris-chlorpropylphosphat und Tris-2,3-dibrompropylphosphat.

Ausser den bereits genannten halogensubstituierten Phosphaten können auch anorganische Flammschutzmittel, wie Antimontrioxid, Arsenoxid, Ammoniumphosphat und Calciumsulfat zum Flammfestmachen der Polyisocyanuratschaumstoffe verwendet werden. Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile Polyhydroxyverbindung zu verwenden.

Nähere Angaben über die obengenannten anderen üblichen Hilfs- und Zusatzstoffe sind der Fachliteratur, beispielsweise der Monographie von J.H. Saunders und K.C. Frisch «High Polymers», Band XVI, Polyurethanes, Teil 1 und 2, Verlag Interscience Publishers, 1962 bzw. 1964 zu entnehmen.

Die isocyanatgruppenhaltigen Polyisocyanuratschaumstoffe werden nach dem Präpolymer- und vorzugsweise dem One-shot-Verfahren hergestellt. Hierzu mischt man die auf die beschriebene Weise erhaltenen Polyhydroxyverbindungen bzw. -gemische mit den Polyisocyanaten, Katalysatoren, Treibmitteln und gegebenenfalls Hilfs- und Zusatzstoffen in den genannten Mengenverhältnissen intensiv bei Temperaturen von 10 bis 40 °C, vorzugsweise 15 bis 33 °C und lässt danach die Reaktionsmischung aufschäumen.

Die gemäss der Erfindung hergestellten urethangruppenhaltigen Polyisocyanuratschaumstoffe besitzen Dichten von 18 bis 60 g/Liter, vorzugsweise 20 bis 45 g/Liter und zeichnen sich durch ihre mechanischen und thermischen Eigenschaften sowie die gute Flammbeständigkeit aus. Die Produkte werden vorzugsweise verwendet als Isoliermaterialien, insbesonders im Bausektor.

Die in den Beispielen genannten Teile beziehen sich auf das Gewicht.

Beispiele 1 bis 20

Allgemeine Herstellungsvorschrift

Komponente A:

Zur Herstellung der Polyisocyanurat-Schaumstoffe werden die in der Tabelle in den Kolonnen 1 bis 30 genannten Ausgangsstoffe und -mengen (Teile) gemischt. Die durch die Neutralisationswärme erhitzte Mischung wird abgekühlt und mit Treibmittel (Kolonne 31) versetzt.

Um Treibmittelverluste zu vermeiden, ist es zweckmässig, bis unter den Siedepunkt des Treibmittels abzukühlen. Zum Abkühlen kann auch die Verdampfungswärme des Treibmittels verwendet werden. In diesem Falle ist darauf zu achten, dass die in Kolonne 31 genannten Treibmittelmengen in der Mischung zurückbleiben.

Komponente B:

Als Komponente B wird eine Mischung aus Diphenylmethan-diisocyanaten und Polyphenyl-polymethylen-polyisocyanaten (Roh-MDI) in den in Kolonne 32 genannten Mengen verwendet. Die Komponenten A und B werden intensiv gemischt, und die schaumfähige Mischung wird in eine offene Form gegossen. Wird kontinuierlich gemischt, so muss das Mischungsverhältnis stets dem in der Tabelle genannten Mengenverhältnis ensprechen. Das Gemisch schäumt bei Komponententemperaturen von ungefähr 23 °C mit den in der Tabelle genannten Reaktionszeiten auf.

Die Messung der in der Tabelle genannten mechanischen, thermischen und brandschutztechnischen Eigenschaften werden aus plattenförmigen Schaumstoffen Probekörper ausgeschnitten. Bestimmt werden das Raumgewicht nach DIN 53 420, die Druckfestigkeit nach DIN 53 421, die Formbeständigkeit in der Wärme nach DIN 53 424 und die Baustoffklasse nach DIN 4102, Teil 1.

Die in der Tabelle genannten Ausgangskomponenten wurden wie folgt abgekürzt:

I: Polyätherol auf Basis Äthylendiamin/Propylenoxid mit einer OH-Zahl von ungefähr 750 bis 800 (®Lupranol 3400)

II: Polyätherol auf Basis Äthylendiamin/Propylenoxid mit einer OH-Zahl von ungefähr 460 bis 500 (Lupranol 3420)

III: Polyesterol aus einem Dicarbonsäuregemisch, Äthylenglykol und Triisopropanolamin mit einer OH-Zahl von 300 bis 360

IV: Polyesterol aus einem Dicarbonsäuregemisch und Triisopropanolamin mit einer OH-Zahl von 420 bis 460

V: Triäthanolamin

VI: Diäthanolamin

VII: Polyätherol auf Basis Sucrose/Propylenoxid mit einer OH-Zahl von 380 bis 420

VIII: Polyätherol auf Basis Sorbit/Propylenoxid mit einer OH-Zahl von 390 bis 430

IX: halogeniertes Polyätherol (®Ixol BP 401 der Firma Solvay und Cie., Brüssel)

X: Polyesterol auf der Basis eines Dicarbonsäuregemisches, Äthylenglykol und mehrwertigen Alkohols mit einer OH-Zahl von 230 bis 270

XI: Wasser

XII: Propylenglykol

XIII: Äthylenglykol

XIV: Naphthensäure 1 (Säurezahl 90 bis 105)

XV: Naphthensäure 2 (Säurezahl 120 bis 135)

XVI: Naphthensäure 3 (Säurezahl 150 bis 170)

XVII: Naphthensäure 4 (Säurezahl 180 bis 200)

XVIII: Naphthensäure 5 (Säurezahl 210 bis 230)

XIX: N,N′,N″-Tris-(dimethylaminopropyl)-s-hexahydrotriazin

XX: Kaliumoctoat

XXI: Kaliumformiat

XXII: Natriumhydroxid

XXIII: Kaliumhydroxid

XXIV: Dimethylcyclohexylamin

XXV: Schaumstabilisator auf Basis eines polyäthermodifizierten Polysiloxan (®Tegostab B 1903 der Firma Goldschmidt AG, Essen)

XXVI: Hartschaumstabilisator (DOW Corning Öl 193 der Firma DOW Corning International, Brüssel)

XXVII: als Schaumstabilisator wirkendes Copolymer eines Dimethylpolysiloxans und eines Polyoxyalkylenäthers (SF 1066 fluid der Firma General Electric, New York)

XVIII: Tris-(2-chloräthyl)-phosphat

XXIX: Tris-(chlorpropyl)-phosphat

XXX: Tris-(2,3-dibrompropyl)-phosphat

XXXI: Trichlorfluormethan

XXXII: Mischung aus Diphenylmethan-diisocyanaten und Polyphenyl-polymethylen-polyisocyanaten (roh-MDI)

Tabelle

| Ausgangskomponente | I | II | III | IV | V | VI | VII |
|---|---|---|---|---|---|---|---|
| Beispiel | | | | | | | |
| 1 | 85 | | | | | | |
| 2 | | | 262 | | | | |
| 3 | | | | 167 | | | |
| 4 | | | | | 83 | | |
| 5 | | | | | | 18 | 172 |

Fortsetzung Tabelle

| Ausgangs-komponente | I | II | III | IV | V | VI | VII |
|---|---|---|---|---|---|---|---|
| Beispiel | | | | | | | |
| 6 | | 189 | | | | | |
| 7 | | | 215 | | | | |
| 8 | | | | 188 | | | |
| 9 | 58 | | | | | | |
| 10 | 16 | | | | | 16 | 161 |
| 11 | | | 89 | | | | |
| 12 | | | | 94 | | | |
| 13 | | | 248 | | | | |
| 14 | | | | 67 | | | |
| 15 | 29 | | | | | | |
| 16 | | | 148 | | | | |
| 17 | 24 | 14 | | | | | |
| 18 | | | | 40 | 13 | | |
| 19 | | | 268 | | | | |
| 20 | | | 204 | | | | |

Fortsetzung Tabelle

| Ausgangs-komponente | VIII | IX | X | XI | XII | XIII | XIV |
|---|---|---|---|---|---|---|---|
| Beispiel | | | | | | | |
| 1 | | | | | | 2,8 | |
| 2 | | | | | | | |
| 3 | | | | 2,0 | | | 18,3 |
| 4 | | | | | | | |
| 5 | | | | | 2,6 | | |
| 6 | | | | | | 2,1 | |
| 7 | | | | | | | |
| 8 | | | | | 1,3 | | 26 |
| 9 | | 30 | 118 | 1,8 | | | |
| 10 | | | | | | 4,2 | |
| 11 | 147 | | | 1,5 | | | |
| 12 | | 27 | 109 | | 1,6 | | |
| 13 | | | | | 3,1 | | |
| 14 | 146 | | | | | 3,8 | |
| 15 | | 38 | 138 | | | 3,3 | |
| 16 | | | | | | | |
| 17 | | 60 | 151 | | | | |
| 18 | | 38 | 141 | | 3,8 | | |
| 19 | | | | 4,2 | | | |
| 20 | | | | 3,7 | | | 17 |

Fortsetzung Tabelle

| Ausgangs-komponente | XV | XVI | XVII | XVIII | XIX | XX | XXI |
|---|---|---|---|---|---|---|---|
| Beispiel | | | | | | | |
| 1 | | | 133 | | 6,5 | | 1,5 |
| 2 | | | 26 | | 17 | | |
| 3 | | | | 59 | | | 3,7 |
| 4 | | 168 | | | 5 | | |
| 5 | | | 96 | | | 5,1 | |
| 6 | 116 | | | | 9,1 | | 0,9 |
| 7 | | | | 41 | 18 | | |
| 8 | | 39 | | | 7,6 | 2,5 | |
| 9 | | | 90 | | 12 | | |
| 10 | | | 129 | | 6,5 | | 2,3 |

Fortsetzung Tabelle

| Ausgangs-komponente | XV | XVI | XVII | XVIII | XIX | XX | XXI |
|---|---|---|---|---|---|---|---|
| Beispiel | | | | | | | |
| 11 | 42 | | | 16 | 8,8 | | |
| 12 | | 43 | | | 8,2 | 3,3 | |
| 13 | 62 | | | | | 6,2 | |
| 14 | | | 79 | | 11 | | 2,0 |
| 15 | | | 46 | | 7,5 | | 1,8 |
| 16 | | 20 | | 32 | 6 | | |
| 17 | | 53 | | | 12 | | |
| 18 | | | | 24 | | 7,7 | |
| 19 | | | 14 | | | | |
| 20 | 27 | | | | | | |

Fortsetzung Tabelle

| Ausgangs-komponente | XXII | XXIII | XXIV | XXV | XXVI | XXVII | XXVIII |
|---|---|---|---|---|---|---|---|
| Beispiel | | | | | | | |
| 1 | | | 2,2 | 2,2 | | | 26 |
| 2 | | | | 2,9 | | | |
| 3 | | | 9,8 | | 2,7 | | |
| 4 | | | | | 3,0 | | |
| 5 | | | 2,9 | 2,9 | | | 34 |
| 6 | | | 6,1 | | | 2,7 | 24 |
| 7 | | | | | | 2,3 | |
| 8 | | | 7,6 | | 2,5 | | |
| 9 | 1,8 | | | 2,7 | | | 35 |
| 10 | | | 6,5 | | | 3,2 | 32 |
| 11 | | 1,5 | | 2,9 | | | |
| 12 | | | | | 2,5 | | 33 |
| 13 | | | 6,2 | 3,1 | | | |
| 14 | | | | 2,9 | | | |
| 15 | | | 2,5 | 2,5 | | | 30 |
| 16 | | | 4 | | | 2,4 | |
| 17 | | | 6 | | 3 | | |
| 18 | | | 5,1 | | | 2,8 | |
| 19 | 4,2 | | 5,6 | | | 2,8 | |
| 20 | | 3,7 | 5 | | 2,2 | | |

Fortsetzung Tabelle

| Ausgangs-komponente | XXIX | XXX | XXXI | XXXII |
|---|---|---|---|---|
| Beispiel | | | | |
| 1 | | | 115 | 626 |
| 2 | 43 | | 130 | 519 |
| 3 | | 22 | 100 | 615 |
| 4 | | 43 | 95 | 603 |
| 5 | | | 109 | 558 |
| 6 | | | 101 | 549 |
| 7 | 46 | | 123 | 554 |
| 8 | | 51 | 106 | 569 |
| 9 | | | 118 | 532 |
| 10 | | | 123 | 500 |
| 11 | 44 | | 115 | 532 |
| 12 | | | 131 | 547 |
| 13 | | 40 | 130 | 502 |

Fortsetzung Tabelle

| Ausgangs-komponente | XXIX | XXX | XXXI | XXXII |
|---|---|---|---|---|
| Beispiel | | | | |
| 14 | 29 | | 132 | 527 |
| 15 | | | 125 | 576 |
| 16 | | 20 | 126 | 641 |
| 17 | | | 136 | 541 |
| 18 | 51 | | 110 | 563 |
| 19 | 20 | 20 | 85 | 576 |
| 20 | | 25 | 62 | 650 |

Tabelle Fortsetzung

| Beispiel | Schäumzeiten | | | Raum-gewicht [g/l] | Druck-festigkeit [k·Pa] | Formbestän-digkeit in der Wärme [°C] | Baustoff-klasse |
|---|---|---|---|---|---|---|---|
| | Startzeit | Abbinde-zeit [sec.] | Steigzeit | | | | |
| 1 | 7 | 53 | 110 | 29,2 | 155 | 199 | B 2 |
| 2 | 8 | 33 | 85 | 26,3 | 144 | 200 | B 2 |
| 3 | 8 | 32 | 60 | 24,2 | 110 | 178 | B 2 |
| 4 | 5 | 19 | 40 | 34,8 | 122 | 155 | B 2 |
| 5 | 8 | 53 | 140 | – | – | – | – |
| 6 | 9 | 37 | 70 | 41,0 | 189 | 192 | B 3 |
| 7 | 10 | 30 | 60 | 33,3 | 184 | 212 | B 2 |
| 8 | 9 | 33 | 55 | 29,7 | 142 | 168 | B 2 |
| 9 | 14 | 30 | 50 | 26,1 | 112 | 206 | B 2 |
| 10 | 6 | 38 | 95 | – | – | – | – |
| 11 | 9 | 33 | 60 | 26,5 | 150 | 203 | B 3 |
| 12 | 11 | 36 | 90 | 23,5 | 103 | 195 | B 2 |
| 13 | 12 | 44 | 90 | 31,4 | 176 | 210 | B 2 |
| 14 | 11 | 42 | 75 | 24,6 | 124 | 190 | B 3 |
| 15 | 14 | 30 | 50 | 26,1 | 112 | 206 | B 2 |
| 16 | 10 | 34 | 80 | 35,5 | 202 | 210 | B 2 |
| 17 | 9 | 22 | 40 | 26,7 | 122 | 208 | B 2 |
| 18 | 14 | 30 | 50 | 32,5 | 156 | 206 | B 2 |
| 19 | 11 | 30 | 65 | 24,6 | 182 | 183 | B 2 |
| 20 | 9 | 23 | 35 | 28,9 | 115 | 174 | B 2 |

**Patentansprüche**

1. Verfahren zur Herstellung von urethangruppenhaltigen Polyisocyanuratschaumstoffen aus organischen Polyisocyanaten, Polyhydroxyverbindungen, Treibmitteln, Katalysatoren, gegebenenfalls Hilfs- und Zusatzstoffen, dadurch gekennzeichnet, dass man als Polyhydroxyverbindungen saure, neutrale und/oder basische Salze aus hydroxylgruppenhaltigen sekundären und/oder tertiären Aminen und Naphthensäuren verwendet.

2. Verfahren gemäss Anspruch 1, dadurch gekennzeichnet, dass man als Polyhydroxyverbindungen Mischungen aus den genannten Salzen und üblichen Polyolen verwendet.

3. Verfahren gemäss Anspruch 2, dadurch gekennzeichnet, dass die Mischungen bestehen aus

a) 1 bis 90 Gewichtsprozent der genannten Salze und

b) 99 bis 10 Gewichtsprozent eines üblichen Polyols, wobei die Gewichtsprozente bezogen sind auf das Gesamtgewicht der Mischungen.

4. Verfahren gemäss Anspruch 1, dadurch gekennzeichnet, dass die Salze erhalten werden durch Umsetzung von 0,5 bis 30 Äquivalente hydroxylgruppenhaltiger sekundärer und/oder tertiärer Amine pro Carboxyläquivalent der Naphthensäure.

5. Verfahren gemäss Anspruch 1, dadurch gekennzeichnet, dass als hydroxylgruppenhaltige sekundäre und/oder tertiäre Amine verwendet werden Dialkanolamine, Trialkanolamine, N,N,N′,N′-tetrakis(β-hydroxypropyl)äthylendiamin, N,N,N′,N″,N″-pentakis(β-hydroxyäthyl)-diäthylentriamin und niedermolekulare, sekundäre und/oder tertiäre Aminogruppen enthaltende Kondensationsprodukte aus aliphatischen Polyaminen mit 2 bis 12 Kohlenstoffatomen und Äthylenoxid und/oder Propylenoxid.

6. Verfahren gemäss Anspruch 1, dadurch gekennzeichnet, dass als sekundäre und/oder tertiäre Amine verwendet werden sekundäre und/ oder tertiäre Aminogruppen enthaltende Polyesterole.

7. Verfahren gemäss Anspruch 6, dadurch gekennzeichnet, dass als sekundäre und/oder tertiäre Aminogruppen enthaltende Polyesterole Kondensationsprodukte aus aliphatischen Dicarbonsäuren und Isopropanolamingemischen verwendet werden.

### Claims

1. A process for the production of a urethane-group-containing polyisocyanurate foam from an organic polyisocyanate, a polyhydroxy compound, a blowing agent and a catalyst, with or without auxiliaries and additives, wherein the polyhydroxy compound used is an acid, neutral or basic salt, or a mixture of such salts, of naphthenic acid and a hydroxyl-containing amine selected from the group consisting of a secondary amine, a tertiary amine and a mixture thereof.

2. A process as claimed in claim 1, wherein the polyhydroxy compound used is a mixture of one or more of the said salts and a conventional polyol.

3. A process as claimed in claim 2, wherein the mixture consists of
a) 1 to 90 weight percent of one or more of the said salts, and
b) 99 to 10 weight percent of a conventional polyol, the weight percents being based on the total weight of the mixture.

4. A process as claimed in claim 1, wherein the salts are obtained by reacting 0.5 equivalent to 30 equivalents of the hydroxyl-containing amine selected from the group consisting of a secondary amine, a tertiary amine and a mixture thereof per carboxylic equivalent of the naphthenic acid.

5. A process as claimed in claim 1, wherein there is used, as the hydroxyl-containing amine selected from the group consisting of a secondary amine, a tertiary amine and a mixture thereof, a dialkanolamine, a trialkanolamine,
N,N,N′,N′-tetrakis($\beta$-hydroxypropyl)ethylene-di-amine,
N,N,N′,N″,N″-pentakis($\beta$-hydroxyethyl)ethylene-triamine,
or a low molecular weight condensation product containing secondary amino groups, tertiary amino groups or both secondary and tertiary amino groups and prepared from aliphatic polyamines having 2 to 12 carbon atoms and ethylene oxide, propylene oxide or a mixture thereof.

6. A process as claimed in claim 1, wherein there is used, as the amine selected from the group consisting of a secondary amine, a tertiary amine and a mixture thereof, a polyester polyol containing secondary amino groups, tertiary amino groups or both secondary and tertiary amino groups.

7. A process as claimed in claim 6, wherein the polyester polyol containing secondary amino groups, tertiary amino groups or both seondary and tertiary amino groups is a condensation product of an aliphatic dicarboxylic acid and an isopropanolamine mixture.

### Revendications

1. Procédé de fabrication de mousses de polyisocyanurates contenant des groupes uréthane à partir de polyisocyanates organiques, de composés polyhydroxylés, d'agents porogènes, de catalyseurs et éventuellement d'adjuvants et d'additifs, caractérisé en ce que l'on utilise, à titre de composés polyhydroxylés, des sels acides, neutres et/ou basiques d'acides naphténiques et d'amines secondaires et/ou tertiaires contenant des groupes hydroxyle.

2. Procédé suivant la revendication 1, caractérisé en ce que l'on utilise des mélanges des sels précités et de polyols usuels à titre de composés polyhydroxylés.

3. Procédé suivant la revendication 2, caractérisé en ce que les mélanges se composent:
a) de 1 à 90 pour cent en poids des sels précités et
b) de 99 à 10 pour cent en poids d'un polyol usuel, les pourcentages pondéraux se rapportant au poids total des mélanges.

4. Procédé suivant la revendication 1, caractérisé en ce que l'on obtient les sels par réaction de 0,5 à 30 équivalents d'amines secondaires et/ou tertiaires contenant des groupes hydroxyle par équivalent carboxyle de l'acide naphténique.

5. Procédé suivant la revendication 1, caractérisé en ce qu'à titre d'amines secondaires et/ou tertiaires contenant des groupes hydroxyle, on utilise des dialcanolamines, des trialcanolamines,
la N,N,N′,N′-tétrakis($\beta$-hydroxypropyl)éthylène-diamine,
la N,N,N′,N″,N″-pentakis($\beta$-hydroxyéthyl)-diéthylène-triamine
et des produits de condensation contenant des groupes amino secondaires et/ou tertiaires à bas poids moléculaire de polyamines aliphatiques en $C_2$ à $C_{12}$ et d'oxyde d'éthylène et/ou d'oxyde de propylène.

6. Procédé suivant la revendication 1, caractérisé en ce qu'à titre d'amines secondaires et/ou tertiaires, on utilise des polyestérols contenant des groupes amino secondaires et/ou tertiaires.

7. Procédé suivant la revendication 6, caractérisé en ce qu'à titre de polyestérols contenant des groupes amino secondaires et/ou tertiaires, on utilise des produits de condensation de mélanges d'isopropanolamines et d'acides dicarboxyliques aliphatiques.